## Europäisches Patentamt

## European Patent Office

## Office européen des brevets

(19)

(11) Veröffentlichungsnummer: **0 121 821**
**B1**

(12) # EUROPÄISCHE PATENTSCHRIFT

(45) Veröffentlichungstag der Patentschrift:
**10.06.87**

(21) Anmeldenummer: **84102822.8**

(22) Anmeldetag: **15.03.84**

(51) Int. Cl.⁴: **B 60 R 13/06**

(54) **Fensteranordnung mit in der Höhe verstellbarer Fensterscheibe, insbesondere für Kraftfahrzeuge.**

(30) Priorität: **07.04.83 DE 3312472**

(43) Veröffentlichungstag der Anmeldung:
**17.10.84 Patentblatt 84/42**

(45) Bekanntmachung des Hinweises auf die Patenterteilung:
**10.06.87 Patentblatt 87/24**

(84) Benannte Vertragsstaaten:
**DE FR GB IT SE**

(56) Entgegenhaltungen:
**EP-A-0 068 367**
**DE-A-2 827 372**
**DE-A-3 210 468**
**FR-A-2 518 025**

(73) Patentinhaber: **Adam Opel Aktiengesellschaft, Bahnhofsplatz 1 Postfach 1560, D-6090 Rüsselsheim (DE)**

(72) Erfinder: **Warner, Hermann, Ulmenstrasse 13, D-6097 Trebur 1 (DE)**

(74) Vertreter: **Baumgarten, Jochem, Dipl.- Ing., C/O Adam Opel Aktiengesellschaft Bahnhofsplatz 1 Postfach 1560, D-6090 Rüsselsheim (DE)**

EP 0 121 821 B1

LIBER, STOCKHOLM 1987

## Beschreibung

Die Erfindung bezieht sich auf eine Fensteranordnung mit in der Höhe verstellbarer Fensterscheibe, insbesondere für Kraftfahrzeuge, die bündig mit den angrenzenden Karosserieteilen verläuft und deren Führungsmittel sowie die Fensterdichtung auf der Innenseite der Fensterscheibe angeordnet sind und das Führungsmittel am Fensterrahmen unter Zwischenschaltung eines elastisch nachgiebigen Führungsprofils geführt ist, wobei die Fensterdichtung und das mit dem Führungsmittel (Führungsschiene) zusammenwirkende Führungsprofil je von einem Profil gebildet sind.

In der DE-A- 2 827 372 ist die Führungsschiene mittels Ansätzen an den Fensterrahmen angeclipst, wobei sie kein Strangprofil darstellt. Die Fensterdichtung ist zwischen Vorsprüngen im Fensterrahmen und in der Führungsschiene gehalten. Die Ausbildung und Montage der Anordnung ist dadurch relativ aufwendig.

Der Erfindung liegt daher die Aufgabe zugrunde, eine einfach herzustellende und eine einfach zu montierende Fensterdichtung sowie ein einfach herzustellendes und einfach zu montierendes Führungsprofil zu schaffen. Darüber hinaus sollen die am Übergang zwischen dem senkrechten und waagerechten Teil des Fensterrahmens vorzusehenden Formecken kostengünstig ausgeführt werden können.

Erfindungsgemäß sind die Fensterdichtung und das Führungsmittel (Führungsschiene) je von einem Strangprofil gebildet und jedes Strangprofil weist teilweise einen etwa dreieckförmigen Hohlquerschnitt auf, von dem eine Seite unter Druckspannung diagonal in eine Ausnehmung des Fensterrahmenprofils eingesetzt ist. Dadurch ergibt sich eine Befestigung des Strangprofils der Fensterdichtung bzw. des Führungsprofils am Fensterrahmenprofil, die leicht herstellbar, jedoch schwer lösbar ist. Dabei kann zur Erzielung eines besonders festen Sitzes des Strangprofils am Fensterrahmenprofil der dreieckförmige Hohlkörper von einem etwa rechtwinkligen Dreieck gebildet sein, dessen diagonaler Steg diagonal in einer U-förmigen Ausnehmung des Fensterrahmenprofils verläuft und dessen äußeres von der Fensterdichtung abgewandtes Ende gegen eine Erhöhung in der U-förmigen Ausnehmung liegt, wobei das nach innen reichende Ende des Steges nach der Dichtlippe bzw. dem Dichtwulst zu liegt. Auf diese Weise ist bei einem Zug an der Dichtlippe bzw. dem Dichtwulst, was bei angefrorener Scheibe auftreten kann, ein Herausziehen der Dichtung aus dem Fensterrahmenprofil kaum möglich. Diese Befestigung kann für alle einseitig gehaltenen Profile angewendet werden. Zusätzlich zu oder anstelle dieser Sicherung kann auch an der an dem Flansch anliegenden Seite des Hohlprofils eine Nase angebracht sein, die sich an einem Vorsprung am Flansch, insbesondere einer Bördelkante verhakt.

Der obere Rand des Fensterrahmenprofils ist zweckmäßig so ausgebildet, daß neben dem Strangprofil der Fensterdichtung, die gleich dem senkrechten Teil ausgebildet ist, ein weiteres Profil angeordnet ist, das als oberer Anschlag für die Fensterscheibe dient und den Spalt zwischen Fensterscheibe und Karosserie verschließt bzw. abdichtet.

Ausführungsbeispiele der Erfindung werden anhand der Zeichnung näher erläutert.

In dieser zeigen:

Fig. 1 eine Fahrzeugtür in Seitenansicht,
Fig. 2 einen Schnitt nach Linie II - II in Fig. 1,
Fig. 3 eine Einzelheit aus Fig. 2,
Fig. 4 einen Schnitt nach Linie IV - IV in Fig. 1,
Fig. 5 ebenfalls einen Schnitt nach Linie IV - IV in Fig. 1 bei einer anderen Ausführungsform.

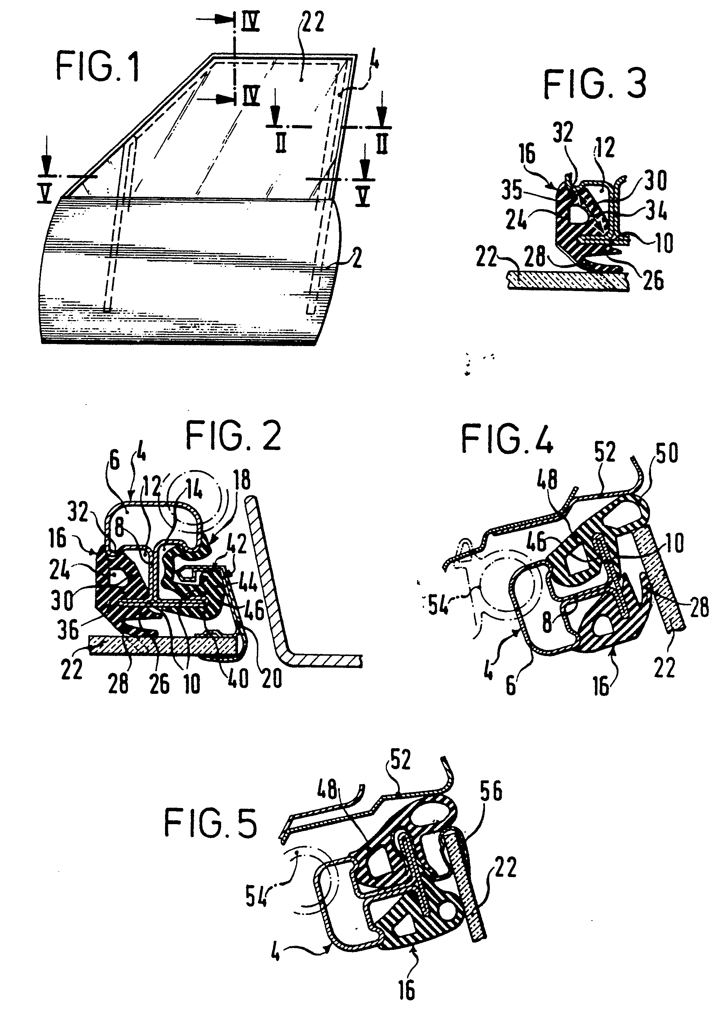

Die Fahrzeugtür 2 in Fig. 1 ist mit einem nach dem Fahrzeuginnern zu liegenden Fensterrahmen 4 versehen, dessen seitliche Abschnitte sich zwischen Türinnen- und Türaußenblech nach unten erstrecken. Am Fensterrahmen 4 ist die Fensterscheibe 22 geführt. Der Fensterrahmen besteht aus einem gerollten Stahlprofil. Er hat beispielsweise den in Fig. 2 gezeigten Querschnitt, der ein Rohr 6 bildet, mit einem Steg 8, an den sich zwei rechtwinklig dazu verlaufende Flansche 10 anschließen. Jeder dieser Flansche 10 bildet mit einer Seite des Rohrprofils 6 eine U-förmige Ausnehmung 12 bzw. 14. Auf der linken Seite in Fig. 2 ist am Fensterrahmenprofil 4 das Strangprofil 16 der Fensterdichtung angebracht, während auf der rechten Seite des Fensterrahmenprofils 4 als eigenes Strangprofil 18 das Führungsprofil für die Führungsschiene 20 der Fensterscheibe 22 angeordnet ist.

Das Strangprofil 16 der Fensterdichtung besteht im wesentlichen aus einem dreieckförmigen Hohlkörper 24 sowie einer Lippe 26 und der Dichtlippe 28. Die Lippe 26 liegt an der Außenseite des Flansches 10 des Fensterrahmenprofils 4 an, während die Dichtlippe 28, die auch durch einen Dichtwulst ersetzt sein kann, an der Fensterscheibe 22 anliegt. Der dreieckförmige Hohlkörper 24 besitzt den diagonalen Steg 30, der so in die U-förmige Ausnehmung 12 eingesetzt ist, daß das weiter in die U-förmige Ausnehmung 12 hineinreichende Ende in der Nähe der Dichtlippe 28 liegt. Das andere äußere Ende des diagonalen Steges 30 liegt gegen eine Erhöhung 32 am Rohrquerschnitt 6 an, und zwar unter Bildung einer Ausnehmung bzw. eines Hohlraumes 35 (Fig. 3). Der diagonale Steg 30 ist somit entsprechend dem Pfeil 34 in Fig. 3 in der Ausnehmung 12 verspannt. Eine Seite 36 des dreieckförmigen Querschnittes 24 liegt am Flansch 10 an. Durch den Verlauf des diagonalen Steges 30 in der Ausnehmung 12 ist es kaum möglich, die Fensterdichtung von der Seite der Dichtlippe 28 her vom Fensterrahmenprofil 4 abzuziehen. Die Lippe 26 deckt etwa zur Hälfte die beiden Flansche 10 ab. Sie kann sich zweckmäßig mit der Lippe 40 des Strangprofils 16 überdecken, so daß das Fensterrahmenprofil 4 bzw. die Flansche 10 von außen gesehen vollständig abgedeckt sind. Durch den Steg 30 wird der Profilabschnitt 36 gegen den Flansch 10 gedrückt, wodurch eine hohe Reihung entsteht, durch die das Profil auch bei angefrorener Scheibe und Bewegen derselben festgehalten wird.

Das extrudierte Führungsprofil 18 ist als Führungsbahn für die Führungsschiene 20 ausgebildet, d. h. es besitzt für die Führungsschiene 20 Führungsflächen 42 sowie eine Hinterschneidung 44. Gehalten ist das Strangprofil 18 am Fensterrahmenprofil 4 unter anderem dadurch, daß das Strangprofil 18 eine Nase 46 besitzt, die sich an eine Bördelkante des einen Flansches 10 des Fensterrahmenprofils 4 verhakt.

Das Strangprofil 16 der Fensterdichtung verläuft nich nur am seitlichen Rand der Fensterschiebe 22, sondern ist auch am oberen Rand vorgesehen, d. h. es befindet sich auch am oberen Teil des Fensterrahmensprofils 4. Dies zeigt die Fig. 4, die einen Schnitt nach Linie IV - IV in Fig. 1 darstellt. Es ist ersichtlich, daß das Strangprofil 16 den gleichen Querschnitt wie in Fig. 2 aufweist. Anstelle des Strangprofils 18 ist ein weiteres Dichtungsprofil 48 vorgesehen. Dieses ist ähnlich dem Strangprofil 18 des Führungsprofils am Fensterrahmenprofil 4 befestigt, d.h. es besitzt ebenfalls eine Nase 46, die sich an einer Bördelkante des Flansches 10 verhakt. Das Dichtungsprofil 48 besitzt einen Wulst 50, der als oberer Anslag für die Fensterschiebe 22 dient und den Spalt zwischen der Festerschiebe 22 und der Karosserie abdichtet bzw. verschließt. Das benachbarte Karosserieteil ist dabei mit 52 und die daran befestigte Türdichtung mit 54 bezeichnet. Der Wulst 50 des Dichtungsprofils 48 verläuft bündig mit der Fensterschiebe 22, die durch den Wulst 50 auch in ihrer oberen Stellung geschützt ist.

Eine der Fig. 4 ähnliche Ausbildung zeigt Fig. 5. Es sind daher die gleichen Bezugszahlen verwendet. Die Strangprofile 16 und 48 sind ebenso wie bei den anderen Ausführungen selbstklemmend am Fensterrahmenprofil 4 gehalten. Das Profil 48 ist an der Gehungsecke der B- und C-Säule mittels eines Formstückes mit dem Profil 16 verbunden. Die Profile in dieser wie auch in den anderen Figuren besitzen einen kleinen Querschnitt und machen daher einen guten optischen Eindruck. In Fig. 5 handelt es sich um eine feste Fensterschiebe 22. Hier ist zwischen der Scheibe 22 und dem Fensterrahmenprofil 4 eine Schiene 56 vorgesehen, die dann notwendig sein kann, wenn der Abstand zwischen Fensterrahmenprofil 4 und Fensterscheibe 22 zu groß ist, weil dann ein Einbruch begünstigt würde. Die Schiene 56 ist am Glas verklebt und wird bei der Montage über den Fensterrahmen geschoben. Aus Fig. 5 ergibt sich, daß die Erfindung auch für fest angeordnete Scheiben Gültigkeit besitzt. Der Querschnitt nach Fig. 5 kann in entsprechender Weise auch für den vertikalen Teil des Rahmens gelten.

## Patentansprüche

1. Fensteranordnung mit in der Höhe verstellbarer Fensterscheibe (22), insbesondere für Kraftfahrzeuge, die bündig mit den angrenzenden Karosserieteilen verläuft und deren Führungsmittel sowie die Fensterdichtung auf der Innenseite der Fensterscheibe (22) angeordnet sind und das Führungsmittel am Fensterrahmen (4) unter Zwischenschaltung eines elastisch nachgiebigen Führungsprofils geführt ist, wobei die Fensterdichtung und das mit dem Führungsmittel (Führungsschiene 20) zusammenwirkende Führungsprofil je von einem Profil (16, 18) gebildet sind, dadurch gekennzeichnet, daß die Fensterdichtung und das Führungsprofil je von einem Strangprofil (16, 18) gebildet sind und jedes Strangprofil (16, 18) teilweise einen etwa dreieckförmigen Hohlquerschnitt aufweist, von dem eine Seite (30) unter Druckspannung diagonal in eine Ausnehmung (12, 14) des Fensterrahmenprofils (4) eingesetzt ist.

2. Fensteranordnung nach Anspruch 1, dadurch gakennzeichnet daß der dreieckförmige Hohlquerschnitt von einem etwa rechtwinkeligen Dreieck gebildet ist, dessen diagonaler Steg (30) diagonal in einer U-förmigen Ausnehmung (12) des Fensterrahmenprofils (4) verläuft und dessen äußeres von der Dichtlippe (28) abgewandtes Ende gegen eine Erhöhung (32) in der U-förmigen Ausnehmung (12) liegt, wobei das nach innen reichende Ende des Steges (30) nach der Dichtlippe (28) bzw. dem Dichtwulst zu liegt.

3. Fensteranordnung nach Anspruch 1 und 2, dadurch gekennzeichnet, daß eine andere Seite (36) des dreieckförmigen Hohlquerschnittes an einem nach der Fensterscheibe (22) zu gebildeten Flansch (10) der U-förmigen Ausnehmung (12) anliegt, an dessen Außenfläche die Lippe (26) anliegt, von dessen mit der Dreieckseite (36) verbundenem Ende die Dichtlippe (28) für die Fensterscheibe (22) abzweigt.

4. Fensteranordnung nach Anspruch 1 bis 3, dadurch gekennzeichnet, daß die Strangprofile (16, 18) der Führungsbahn und der Fensterdichtung auf gegenüberliegenden Seiten des Fensterrahmenprofils (4) angebracht sind.

5. Fensteranordnung nach Anspruch 1 bis 4, dadurch gekennzeichnet, daß an der an dem Flansch (10) anliegenden Seite des Strangprofils (18) eine Nase (46) angebracht ist, die sich an einem Vorsprung am Flansch (10), insbesondere einer Bördelkante verhakt.

6. Fensteranordnung nach Anspruch 1, dadurch gekennzeichnet, daß die Fensterdichtung (Lippe 28) umlaufend an der Fensterscheibe (22) seitlich und oben abdichtet.

7. Fensteranordnung nach Anspruch 1 und 6, dadurch gekennzeichnet, daß am oberen Rand des Fensterrahmenprofils (4) neben dem Strangprofil (16) der Fensterdichtung ein weiteres Profil (48) angeordnet ist, das als oberer Anschlag für die Fensterscheibe (22) dient und den Spalt zwischen Fensterscheibe (22) und Karosserie (52) verschließt bzw. abdichtet.

8. Fensteranordnung nach Anspruch 1 bis 7, dadurch gekennzeichnet, daß das Fensterrahmenprofil (4) von einem Rohrquerschnitt (6) gebildet wird, von dem ein Steg (8) abzweigt, an den sich etwa rechtwinklig nach beiden Seiten abgebogene Flansche (10) anschließen.

9. Fensteranordnung nach Anspruch 8, dadurch gekennzeichnet, daß das Fensterrahmenprofil (4) etwa U-Form mit einem verbreiterten Schenkel (6) aufweist.

10. Fensteranordnung nach einem oder mehreren der vorhergehenden Ansprüche mit einer feststehenden Fensterscheibe, dadurch gekennzeichnet, daß zwischen der Fensterdichtung (16) und der Dichtung (48) eine das Fensterrahmenprofil (4) mit dem Scheibenrand (22) verbindende Profilschiene (56) vorgesehen ist.

11. Fensteranordnung nach Anspruch 1 bis 10, dadurch gekennzeichnet, daß jedes Strangprofil (16, 18) eine Lippe (26, 40) aufweist, die die nach der Fensterscheibe (22) zu liegende Fläche des Fensterrahmenprofils (4) abdeckt.

**Claims**

1. Window arrangement, especially for motor vehicles, with a height-adjustable window pane (22) which runs flush with the adjacent body parts and whose guide means as well as the window seal are arranged on the inside of the window pane (22), and the guide means is provided on the window frame (4) with the interpositioning of an elastically yielding guide section, in which the window seal and the guide section interacting with the guide means (guide seal 20) are each formed from one section (16, 18), characterised in that the window seal and the guide section are each formed from a continuous section (16, 18) and each continuous section (16, 18) is partially provided with an approximately triangular-shaped hollow section, of which one side (30) is inserted diagonally under compressive stress in a recess (12, 14) of the window frame section (4).

2. Window arrangement according to claim 1, characterised in that the triangular-shaped hollow cross-section is formed from an approximately right-angular triangle whose diagonal cross-piece (30) extends diagonally in a U-shaped recess (12) of the window frame section (4) and whose outer end facing away from the sealing lip (28) rests against a prominence (32) in the U-shaped recess (12), whereby the inwardly reaching end of the cross-piece (30) is positioned towards the sealing lip (28) or the sealing bead.

3. Window arrangement according to claim 1 and 2, characterised in that another side (36) of the triangular-shaped hollow cross-section rests against a flange (10) of the U-shaped recess (12), facing the window pane (22), against the outer surface of which rests the lip (26) from whose end, which is connected with the triangular side (36), branches the sealing lip (28) for the window pane (22).

4. Window arrangement according to claim 1 to 3, characterised in that the continuous section (16, 18) of the guide track and the window seal are attached to opposite sides of the window frame section (4).

5. Window arrangement according to claim 1 to 4, characterised in that on the side adjacent the flange (10) of the continuous section (18) there is attached a lug (46) which hooks on to a protrusion of the flange (10), especially an edge of the flange.

6. Window arrangement according to claim 1, characterised in that the window seal (lip 28) forms a seal around the window pane (22) laterally and above.

7. Window arrangement according to claim 1 and 6, characterised in that at the upper edge of the window frame section (4), besides the continuous section (16) of the window seal, there is arranged a further section (48) which serves as the upper stop for the window pane (22) and which locks or seals the gap between window pane (22) and body (52).

8. Window arrangement according to claim 1 to 7, characterised in that the window frame section (4) is formed from a tubular cross-section (6) from which branches a cross-piece (8) to which are connected flanges (10) which are deflected approximately at right angles to both sides.

9. Window arrangement according to claim 8, characterised in that the window frame section (4) is approximately U-shaped with an expanded limb (6).

10. Window arrangement according to at least one of the aforementioned claims with a fixed window pane, characterised in that between the window seal (16) and the seal (48) there is provided a rail section (56) connecting the window frame section (4) with the window pane edge (22).

11. Window arrangement according to claim 1 to 10, characterised in that each continuous section (16, 18) has a lip (26, 40) which covers the surface of the window frame section (4) facing the window pane (22).

**Revendications**

1. Fenêtre avec vitre (22) déplaçable en hauteur, en particulier pour véhicules automobiles, laquelle est disposée à fleur des éléments contigus de la carrosserie et dont le moyen de guidage ainsi que le joint sont placés sur la face interne de la vitre (22) et le moyen de guidage est fixé sur le cadre (4) de la fenêtre avec intercalation d'un profilé de guidage flexible et élastique, le joint de la fenêtre et le profilé de guidage, coopérant avec le moyen de guidage (glissière 20), étant respectivement formés par un profilé (16,18),

caractérisée par le fait que le joint de la fenêtre et le profilé de guidage sont respectivement formés par un profilé extrudé (16,18) et que chaque profilé extrudé (16, 18) présente en partie une section transversale creuse sensiblement triangulaire dont un côté (30) est encastré diagonalement sous contrainte de compression dans un évidement (12, 14) du cadre (4) de la fenêtre.

2. Fenêtre selon la revendication 1,
caractérisée par le fait que la section transversale creuse triangulaire est formée par un triangle à peu près rectangle dont l'hypothénuse (30) est disposée en diagonale dans un évidement (12) en forme d'U du cadre (4) de la fenêtre et dont l'extrémité extérieure, située du côté opposé à la lèvre d'étanchéité (28), vient s'appliquer contre une excroissance (32) dans l'évidement (12) en forme d'U, l'extrémité, située à l'intérieur, de l'hypothénuse (30), étant tournée vers la lèvre d'étanchéité (28) ou le bourrelet d'étanchéité.

3. Fenêtre selon la revendication 1 et 2,
caractérisée par le fait qu'un autre côté (36) de la section transversale creuse triangulaire repose sur une bride (10) de l'évidement (12) en forme d'U qui est formée du côté de la vitre (22) et sur la face externe de laquelle vient s'appliquer la lèvre (26) dont l'extrémité raccordée au côté (36) du triangle sert de base à partir de laquelle se détache la lèvre d'étanchéité (28) pour la vitre (22).

4. Fenêtre selon les revendications 1 à 3,
caractérisée par le fait que les profilés extrudés (16, 18) de la glissière et du joint de la fenêtre sont placés sur des côtés opposés du cadre (4) de la fenêtre.

5. Fenêtre selon les revendications 1 à 4,
caractérisée par le fait que sur le côté, venant s'appliquer sur la bride (10), du profilé extrudé (18), est aménagé un talon (46) qui s'accroche sur une saillie de la bride (10), en particulier sur une arête repliée.

6. Fenêtre selon la revendication 1,
caractérisée par le fait que le joint de la fenêtre (lèvre 28) appliqué autour de la vitre (22) assure l'étanchéité latéralement et en-haut.

7. Fenêtre selon les revendications 1 et 6,
caractérisée par le fait que, sur le bord supérieur du cadre (4) de la fenêtre, en plus du profilé extrudé (16) du joint de la fenêtre, est disposé un autre profilé (48) qui sert de butée supérieure à la vitre (22) et ferme et étanche la fente comprise entre la vitre (22) et la carrosserie (52).

8. Fenêtre selon les revendications 1 à 7,
caractérisée par le fait que le cadre (4) de la fenêtre est formé par une section transversale tubulaire (6) de laquelle part une nervure (8) à laquelle se raccorde des brides (10) coudées à peu près à angle droit des deux côtés.

9. Fenêtre selon la revendication 8,
caractérisée par le fait que le cadre (4) de la fenêtre est sensiblement en forme d'U avec une branche élargie (6).

10. Fenêtre selon l'une ou plusieurs des revendications précédentes, comportant une vitre fixe,
caractérisée par le fait qu'une barre profilée (56) raccordant le cadre (4) de la fenêtre au bord de la vitre (22) est prévue entre le joint (16) de la fenêtre et le joint (48).

11. Fenêtre selon les revendications 1 à 10,
caractérisée par le fait que chaque profilé extrudé (16, 18) comporte une lèvre (26, 40) qui recouvre la surface du cadre de la fenêtre qui est tournée du côté de la vitre (22).

0 121 821

FIG.1

FIG. 3

FIG. 2

FIG.4

FIG.5